(19) Europäisches Patentamt
European Patent Office
Office européen des brevets

(11) **EP 1 791 021 A2**

(12) **EUROPEAN PATENT APPLICATION**

(43) Date of publication:
**30.05.2007  Bulletin 2007/22**

(51) Int Cl.:
***G02F 1/31*** *(2006.01)*

(21) Application number: **06003926.0**

(22) Date of filing: **27.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.11.2005  JP 2005339457**

(71) Applicant: **FUJITSU LIMITED**
**Kawasaki-shi,**
**Kanagawa 211-8588 (JP)**

(72) Inventors:
- **Nakano, Takashi,**
**c/o Fujitsu Limited**
**Kawasaki-shi,**
**Kanagawa 211-8588 (JP)**
- **Noguchi, Masaji,**
**c/o Fujitsu Ltd.**
**Kawasaki-shi,**
**Kanagawa 211-8588 (JP)**

- **Satou, Tatsuji,**
**c/o Fujitsu Ltd.**
**Kawasaki-shi,**
**Kanagawa 211-8588 (JP)**
- **Ueno, Tomohiro,**
**c/o Fujitsu Ltd.**
**Kawasaki-shi,**
**Kanagawa 211-8588 (JP)**
- **Kai, Yutaka,**
**c/o Fujitsu Ltd.**
**Kawasaki-shi,**
**Kanagawa 211-8588 (JP)**
- **Takita, Yutaka,**
**c/o Fujitsu Ltd.**
**Kawasaki-shi,**
**Kanagawa 211-8588 (JP)**

(74) Representative: **HOFFMANN EITLE**
**Patent- und Rechtsanwälte**
**Arabellastrasse 4**
**81925 München (DE)**

(54) **Method and apparatus for controlling optical switch**

(57)    A response-time storing unit stores a response time from start of output of driving force required for switching paths until stabilization of the driving force, for each of the paths to be connected. A driving-force correcting unit corrects output level of the driving force, starting correction of the output level of the driving force after the response time for a specified path stored in the response-time storing unit has passed since output of the driving force required for switching to the specified path started.

FIG.1

**Description**

BACKGROUND OF THE INVENTION

1. Field of the Invention

The present invention relates to a technology for starting a fine control of an output signal light at an appropriate waiting time according to a path to be connected to reduce a switching time of an optical switch.

2. Description of the Related Art

Use of materials having an electro-optical (EO) effect capable of changing a deflecting angle of a signal light correlating with the size of the electric field, such as PLZT, has been focused on as a means of switching an optical line, and is expected to be applied to optical-signal switching devices such as an optical router that switches a large-volume optical line at a high speed.

In an EO device formed by sandwiching the material having the EO effect between two electrodes, the deflecting angle of the signal light changes according to the electric field generated between the two electrodes. An optical switch using such an EO device as a means of switching the optical signal (hereinafter, "EO optical switch") enables to switch the path of the optical signal by controlling voltage applied to each EO device. Such an EO optical switch has a lot of advantages including the higher operating speed and the longer life compared with a micro electro mechanical systems (MEMS) optical switch that mechanically switches the path using a mirror and the like.

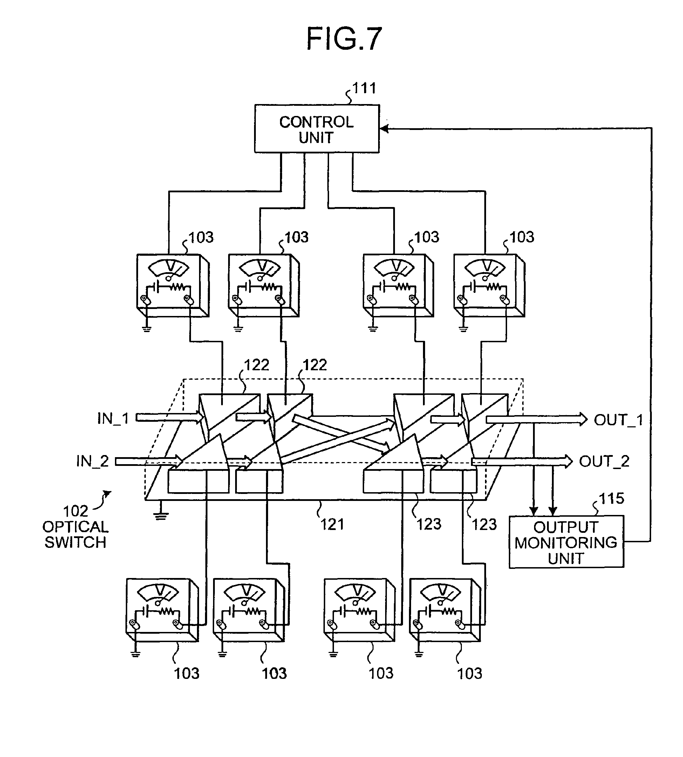

In the conventional EO optical switches, each EO device used to have a power supply as a unit of voltage application. Fig. 7 is a schematic for illustrating an operation of the conventional optical switch. An EO optical switch 102 shown in the figure is a two-channel optical-signal switching device having two input ports and two output ports.

The EO optical switch 102 includes EO devices 122 and 123 as means of switching the optical light. With each of the EO devices 122 and 123, an upper electrode is connected with a power supply 103. A lower electrode is integrated with a substrate 121, and the substrate 121 is grounded. A control unit 111 can control the voltage applied to the upper electrode of each EO device 122 and 123 by controlling the power supply 103.

When a first voltage V1 is applied to each electrode of the EO optical switch, the input port IN_1 and the output port OUT_2 are electrically connected. Namely, a signal light input to the input port IN_1 transmits through the EO device 122 on the input side, and the transmitted signal light is deflected toward the EO device 123 on the output side corresponding to the output port OUT_2. The signal light transmitted through the EO device 123 on the output side is deflected again to be substantially parallel to the signal light input from the input port, and the deflected signal light is output to the output port OUT_2.

When a second voltage V2 different from the first voltage is applied to each electrode, the optical deflecting angle of each EO device 122 and 123 changes and the input port IN_1 and the output port OUT_1 are electrically connected. In this way, the path of the EO optical switch 102 can be switched by changing the voltage applied to each electrode.

After a certain waiting time has passed since the voltage application started, an output monitoring unit 115 starts detecting the output signal light from the EO optical switch 102, and the control unit 111 corrects the voltage applied to each electrode according to the result of the detection and executes fine control of the output signal light.

The two-channel EO optical switch as shown in Fig. 7 uses two different applied voltages V1 and V2 required for switching the path. Therefore, by providing a switch for switching ON/OFF of the electricity with respect to each electrode, the two different applied voltages can be selectively controlled for each electrode even in a configuration in which a power supply applies voltage to a plurality of electrodes. Also, even when such an EO optical switch is made to have multiple channels, for instance N channels, by providing each input port or output port with N-1 pieces of EO devices and selecting the number of electrodes to be electrically conducted from the numbers between zero and N-1, N deflecting directions can be obtained for the signal light transmitting through these EO devices. For instance, Japanese Patent Application Laid-Open No. 2003-98559 discloses an optical switch capable of deflecting the signal light by using an EO device.

When the EO optical switch described above is made to have multiple channels, with the configuration in which each EO device has a power supply, a huge number of power supplies must be provided. Also, in the method of selecting the number of electrodes to be electrically conducted according to the number of the channels, the number of the EO devices required for switching the path increases in proportion to approximately the square of the number of the channels, and in this case also a huge number of EO devices and power supplies to turn electricity on and off must be provided. Therefore, to restrain grow of the size of the general apparatus required for control of the EO optical switch, it is necessary to use a general-purpose amplifier such as an operational amplifier as a means of voltage application.

However, when the general-purpose amplifier is used as a means of voltage application, an integration circuit is configured equivalently by an output impedance R of the general-purpose amplifier and a capacitance C present between the electrode of the EO device and the substrate, which provides an effect to increase a delay time t required until the output voltage stabilizes to a considerable degree. This is because the output impedance R by the general-purpose amplifier is extremely higher than that of the conventional power supply, accordingly a time constant $\tau=CR$ in the integration circuit also increases.

When the EO optical switch shown in Fig. 7 is made to have multiple channels and each EO device corresponding to the input port and the output port is arranged in parallel, the EO device requires a larger deflecting angle as it becomes closer to the edge of the port. Therefore, so that the capacitance of the EO device is different from port to port, each EO device has different dimension of the electrode.

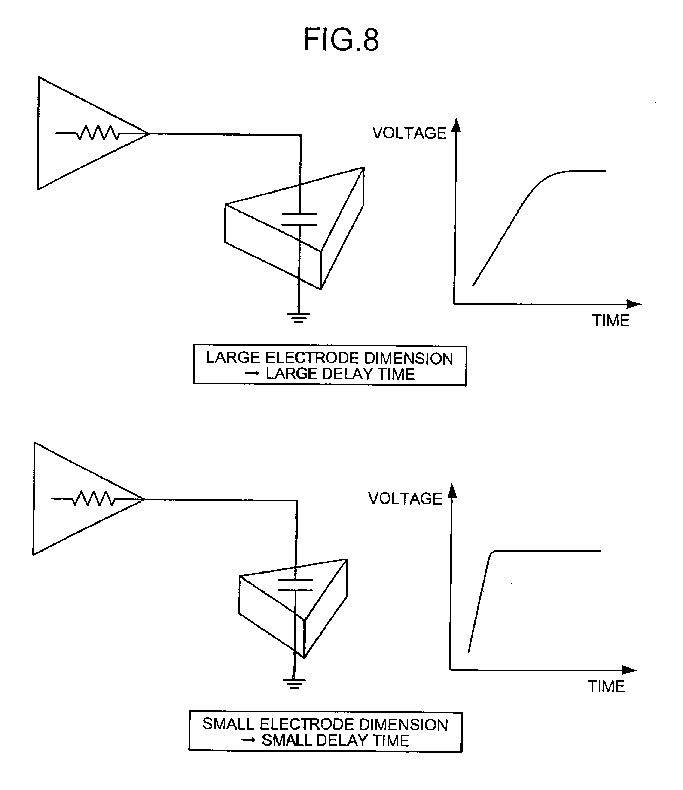

Fig. 8 is a schematic for illustrating a difference of the response speed due to difference of the dimension of the electrode. Since the size of the capacitance C of the EO device is proportional to an electrode dimension S, the time constant $\tau$ and the delay time t also increase as the electrode dimension S of the EO device increases. For this reason, the delay time of each EO device varies depending on the port.

Accordingly, deviation of the delay time due to the difference of the electrode dimension is generated. Therefore, there has been a problem that a redundant waiting time might be generated depending on the path if the waiting time provided since the voltage application starts until fine control of the output signal light is executed is determined equally to all the paths in the conventional way.

SUMMARY OF THE INVENTION

It is an object of the present invention to at least solve the problems in the conventional technology.

An optical-switch control apparatus according to one aspect of the present invention controls switching of paths in an optical switch. The optical-switch control apparatus includes a response-time storing unit that stores a response time from start of output of driving force required for switching paths until stabilization of the driving force, for each of the paths to be connected; and a driving-force correcting unit that corrects output level of the driving force. The driving-force correcting unit starts correction of the output level of the driving force after the response time for a specified path stored in the response-time storing unit has passed since output of the driving force required for switching to the specified path started.

A method of controlling switching of paths in an optical switch, according to another aspect of the present invention includes storing a response time from start of output of driving force required for switching paths until stabilization of the driving force, for each of the paths to be connected; and correcting output level of the driving force. The correcting includes starting correction of the output level of the driving force after the response time for a specified path stored at the storing has passed since output of the driving force required for switching to the specified path started.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a schematic for illustrating an operation of an optical switch controlled by an optical-switch control apparatus according to an embodiment of the present invention;
Fig. 2 is a block diagram of the optical-switch control apparatus according to the present embodiment;
Fig. 3 is an example of a waiting-time table according to the present embodiment;
Fig. 4 is a flowchart of a processing procedure for a path-switching process according to the present embodiment;
Fig. 5 is a schematic for illustrating an example of a method of determining a waiting time according to the present embodiment;
Fig. 6 is a schematic for illustrating another example of the method of determining the waiting time according to the present embodiment;
Fig. 7 is a schematic for illustrating an operation of the conventional optical switch; and
Fig. 8 is a schematic for illustrating a difference of the response speed due to difference of the dimension of the electrode.

DETAILED DESCRIPTION OF THE PREFERRED EMBODIMENTS

Exemplary embodiments of the present invention are explained in detail below with reference to the accompanying drawings. However, the present invention is not limited to the embodiments.

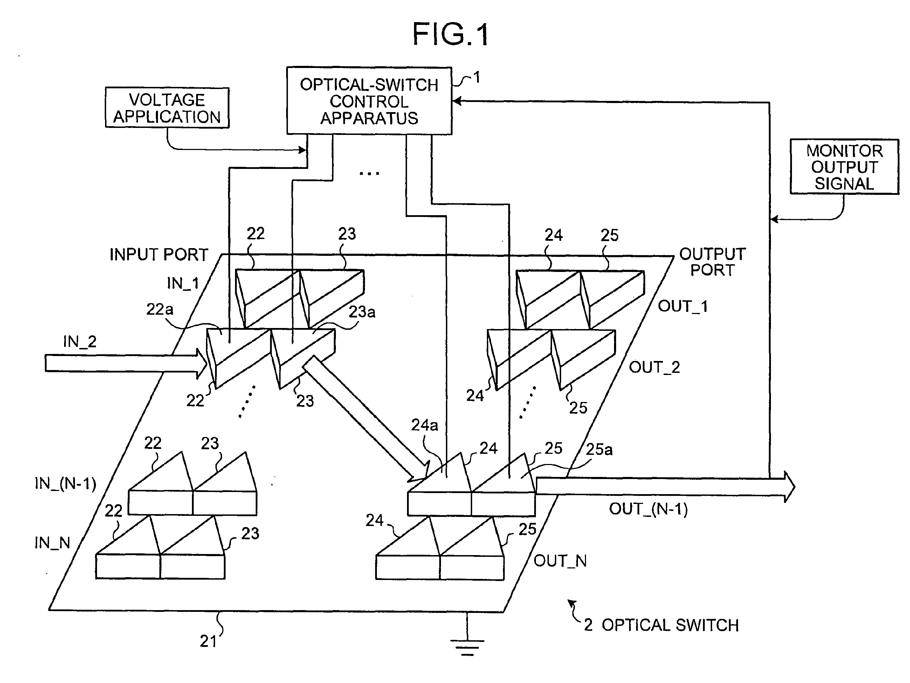

Fig. 1 is a schematic for illustrating an operation of an optical switch 2 controlled by an optical-switch control apparatus 1 according to an embodiment of the present invention. The optical switch 2 is an N-channel optical-signal switching device having N input ports, IN_1 to IN_N, and N output ports, OUT_1 to OUT_N. The optical-switch control apparatus 1 controls switching of the optical signals in the optical switch 2.

On a substrate 21 of the optical switch 2, EO devices 22 to 25 having the EO effect are provided with respect to each input port and output port. The optical switch 2 includes two input-side EO devices 22 and 23 for each of N input ports and two output-side EO devices 24 and 25 for each of N output ports.

The EO devices 22 to 25 are formed of the same material. For instance, the first input-side EO device 22 is formed by sandwiching a material having the electro-optical effect such as PLZT between the substrate 21 and an electrode 22a.

Also, while the substrate 21 is grounded, the electrode 22a is connected to the optical-switch control apparatus 1, and an electric field is generated between the electrode 22a of the first input-side EO device 22 and the substrate 21 by the optical-switch control apparatus 1 applying voltage to the electrode 22a. Since the first input-side EO device 22 has the electro-optical effect at this time, the deflecting angle of the signal light transmitting through the first input-side EO device 22 corresponds to the voltage applied to the electrode 22a.

The other EO devices 23 to 25 are also configured similarly to the first input-side EO device 22. And, by the optical-switch control apparatus 1 applying voltage to each electrode 23a to 25a, the light deflecting angle of each EO device 23 to 25 can be changed corresponding to the voltage.

The deflecting angles of the signal lights from the two input-side EO devices 22 and 23 are configured to make a pair. For instance, while the first input-side EO device 22 deflects the signal light toward the first output port OUT_1, the second input-side EO device 23 is configured to deflect the signal light toward an Nth output port OUT_N. This enables the signal light transmitting through the two input-side EO devices 22 and 23 to deflect toward any output port side.

The two output-side EO devices 24 and 25 are similarly configured to make a pair, and therefore the signal lights deflected by the input-side EO devices 22 and 23 are deflected again to be substantially parallel to the signal light input from the input port by transmitting through the output-side EO devices 24 and 25 and the deflected signal light is output to the output port.

The optical-switch control apparatus 1 controls the deflecting angle of the signal light transmitting through each of the EO devices 22 to 25 by controlling the voltage applied to each electrode 22a to 25a of the optical switch 2, whereby any input port and any output port in the optical switch 2 can be connected.

For instance, by applying a predetermined voltage to each of the electrodes 22a to 25a in the input-side EO devices 22 and 23 corresponding to the second input port IN_2 in the optical switch 2 and the EO devices 24 and 25 corresponding to the (N-1)th output port OUT_(N-1), signal light input from the input port IN_2 is output to the output port OUT_(N-1), allowing the input port IN_2 to be connected to the output port OUT_(N-1).

By the way, with the optical switch 2 according to the present embodiment, the time required from the start of the voltage application until the output voltage stabilizes varies with respect to each path. Therefore, the optical-switch control apparatus 1 according to the present embodiment specifies the time required for stabilization of the output voltage that varies depending on the path in advance, and controls the optical switch 2 based on the time set for each path.

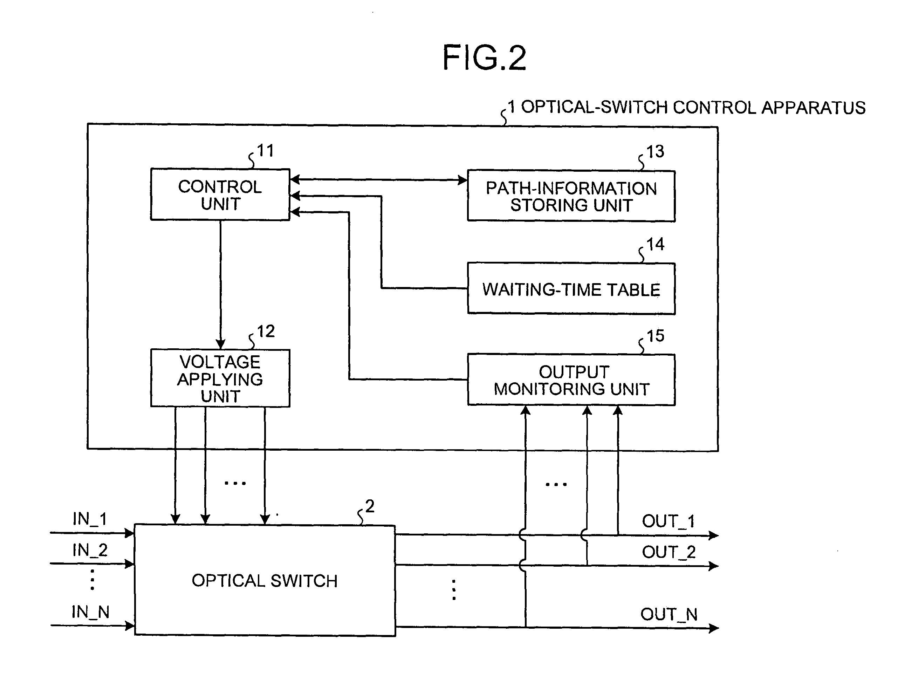

Fig. 2 is a block diagram of the optical-switch control apparatus 1 according to the present embodiment. The optical-switch control apparatus 1 includes a control unit 11, a voltage applying unit 12, a path-information storing unit 13, a waiting-time table 14, and an output monitoring unit 15.

The control unit 11 is a processing section that controls connection of a path in the optical switch 2. The voltage applying unit 12 is a device that supplies voltage to be applied to each of 4N pieces of electrodes 22a to 25a included in the optical switch 2, and is configured with, for instance, an operational amplifier. Also, the voltage applying unit 12 is capable of controlling the voltage applied to each of 4N pieces of electrodes 22a to 25a, and the control unit 11 is capable of controlling switching of the path in the optical switch 2 by controlling these voltage values. The path-information storing unit 13 stores a connected path in the optical switch 2.

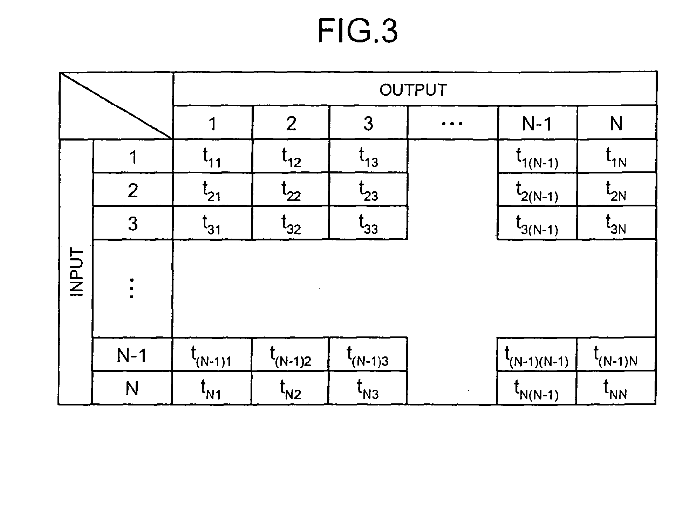

The waiting-time table 14 stores the time after the voltage applying unit 12 starts application of voltage to each of the electrodes 22a to 25a in the optical switch 2 until the output voltage stabilizes and the signal light output from the output port stabilizes. Fig. 3 is an example of the waiting-time table 14 according to the present embodiment. The waiting-time table 14 stores the time until the signal light output in the path stabilizes with respect to each of NxN patterns of paths in the optical switch 2 having N channels.

Rows in the waiting-time table 14 correspond to the input ports IN_1 to IN_N, and the columns correspond to the output ports OUT_1 to OUT_N. For instance, the waiting time when the second input port IN_2 and the (N-1)th output port OUT_(N-1) are connected is t2(N-1).

The output monitoring unit 15 is a processing section that monitors the signal light output from the output port of the optical switch 2. The output monitoring unit 15 detects the signal level of the signal light output from the output port and outputs the detected result to the control unit 11. The control unit 11 then decides whether the signal level detected by the output monitoring unit 15 is within a predetermined range after a predetermined waiting time read from the waiting-time table 14 has passed since the voltage applying unit 12 started to apply voltage to each of the electrodes 22a to 25a in the optical switch 2. And the control unit 11, if the signal level is out of the predetermined range, controls the voltage applying unit 12 so that the signal level is within the predetermined range, and executes correction of the voltage applied to each of the electrodes 22a to 25a in the optical switch 2.

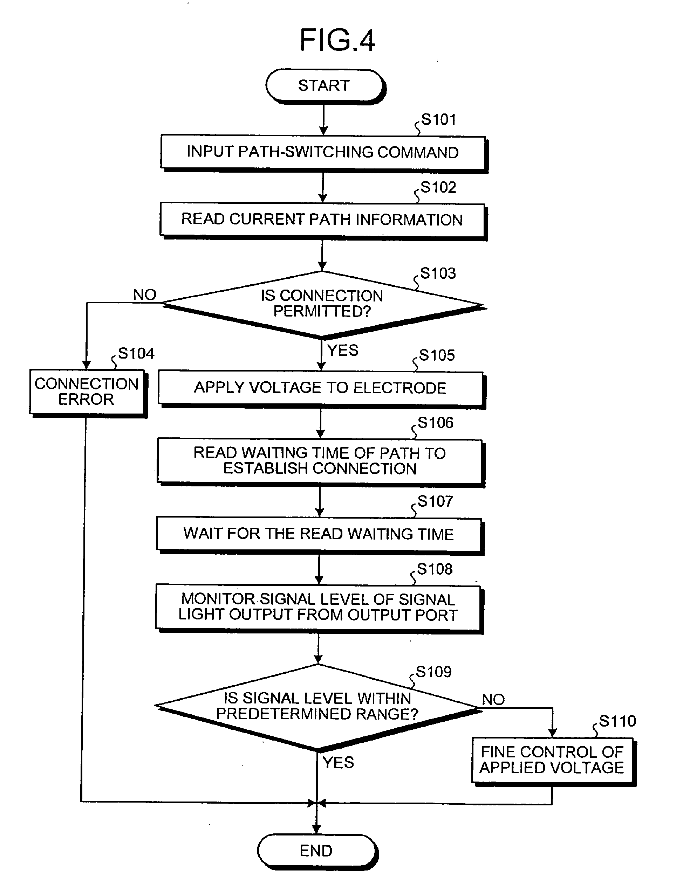

Fig. 4 is a flowchart of a processing procedure for a path-switching process according to the present embodiment. The path-switching process is executed every time a path-switching command is input to the optical-switch control apparatus 1.

When the path-switching command is input to the optical-switch control apparatus 1 (step S101), the control unit 11 reads the current path information stored in the path-information storing unit 13 (step S102).

The control unit 11 then decides whether the input connection of the path is permitted (step S103). Specifically, the control unit 11 decides whether the input port or the output port corresponding to the path-switching command input in step S101 is already used by another path or not, and permits the connection only if both are not in use.

When the connection of the path is not permitted, namely when the applicable input port or output port is already used by another path (step S103, No), the control unit 11 outputs a connection error (step S104) and terminates the path-switching process.

On the other hand, when the connection of the path is permitted, namely when both of the applicable input port and output port are not in use (step S103, Yes), the control unit 11 controls the voltage applying unit 12 and starts application of the predetermined voltage to the electrodes 22a to 25a in the EO devices 22 to 25 corresponding to the input path (step S105).

The control unit 11 then reads the waiting time of the path from the waiting-time table 14 (step S106), and after waiting for the read waiting time (step S107), starts monitoring processing of the output signal light (step S108).

Namely, the control unit 11 decides whether the signal level detected by the output monitoring unit 15 is within the predetermined range (step S109), and when the signal level is not within the predetermined range (step S109, No), executes correction of the voltage applied to the electrode (step S110), and terminates the path-switching process.

On the other hand, when the signal level is within the predetermined range (step S109, Yes), the path-switching process is terminated as it is without correcting the applied voltage.

As described above, since the waiting time that varies depending on the path to be connected is stored in the waiting-time table 14, and the control unit 11 references the waiting time with respect to each path stored in the waiting-time table 14 to decide the signal level of the signal light detected by the output monitoring unit 15 after waiting for the waiting time, it is possible to start fine control of the output signal light with an appropriate waiting time corresponding to the path to be connected, whereby it is possible to reduce the switching time for the optical switch 2.

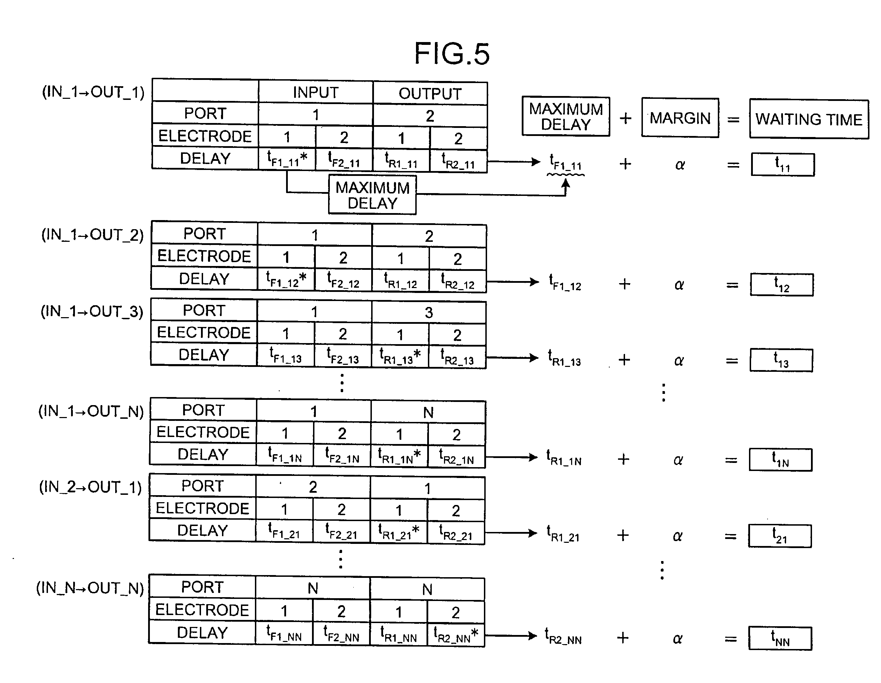

Fig. 5 is a schematic for illustrating an example of a method of determining a waiting time according to the present embodiment. Based on the method of deciding the waiting time shown in the figure, voltage application to the four electrodes 22a to 25a corresponding to the path to be connected starts at the same time.

The time required for the output voltage to be stabilized since the voltage application to the electrodes 22a to 25a in the EO devices 22 to 25 started, namely the delay time, may vary depending on each EO device. Therefore, in this example, the waiting time for each path to be connected is determined with reference to the electrode having the longest delay time among the four electrodes 22a to 25a corresponding to the path.

In Fig. 5, the delay time is specified for each of the four electrodes 22a to 25a corresponding to each path to be connected. According to each delay time, from the left, an input-side electrode "1" corresponds to the electrode 22a of the first input-side EO device 22, an input-side electrode "2" corresponds to the electrode 23a of the second input-side EO device 23, an output-side electrode "1" corresponds to the electrode 24a of the first output-side EO device 24, and an output-side electrode "2" corresponds to the electrode 25a of the second output-side EO device 25.

For instance, when the input port IN_1 is connected to the output port OUT_1, the delay time corresponding to the electrode 22a is $t_{F1\_11}$, the delay time corresponding to the electrode 23a is $t_{F2\_11}$, the delay time corresponding to the electrode 24a is $t_{R1\_11}$, and the delay time corresponding to the electrode 25a is $t_{R2\_11}$.

The waiting time for each path is decided based on the electrode having the longest delay time among the four. For instance, the waiting time $t_{11}$ for connecting the input port IN_1 to the output port OUT_1 is a sum of the longest of the four delay times described above (herein, $t_{F1\_11}$) and a margin $\alpha$ to absorb an error of the delay time.

Namely, the waiting time $t_{ij}$ when the ith input port IN_i is connected to the jth output port OUT_j is decided as described below.

$$t_{ij} = \max(t_{F1\_ij},\ t_{F2\_ij},\ t_{R1\_ij},\ t_{R2\_ij}) + \alpha$$

And the NxN patterns of waiting times $t_{11}$ to $t_{NN}$ decided as described above are stored in the waiting-time table 14, and the control unit 11 executes path-switching process with reference to the waiting time.

In this way, since the waiting time stored in the waiting-time table 14 is decided based on the electrode having the longest delay time among the four electrodes 22a to 25a corresponding to the path to be connected, when voltage application to the four electrodes 22a to 25a starts at the same time, the optical-switch control apparatus 1 can start fine control of the output signal light with an appropriate waiting time corresponding to the target of the driving force output associated with the path to be connected, whereby the switching time for the optical switch 2 can be reduced.

When voltage is applied to all of the four EO devices 22 to 25 in the optical switch 2 at the same time, there is the possibility of temporarily producing a noise in the output voltage. Therefore, hereinafter, explanation is given on the condition that the start of voltage application to each electrode is not simultaneous but voltage is applied to each of the electrodes 22a to 25a in the EO devices 22 to 25 in a predetermined order.

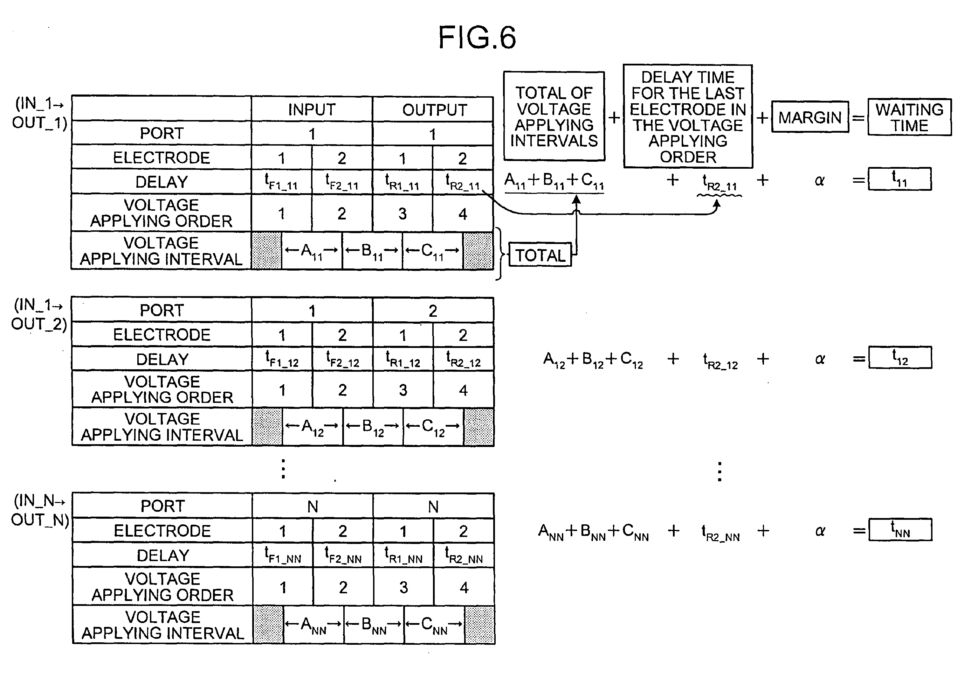

Fig. 6 is a schematic for illustrating another example of the method of determining the waiting time according to the present embodiment. Based on the method of determining the waiting time shown in the figure, the order of voltage application to the four electrodes 22a to 25a corresponding to all the NxN patterns of the paths is specified as 22a, era, 24a, and then 25a.

Based on the method of determining the waiting time, the interval of voltage application between the start of voltage application to a certain electrode and the start of voltage application to the next electrode is specified in advance. For instance, as the interval of voltage application when the input port IN_1 is connected to the output port OUT_1, three of A11, B11, and C11 are specified. A table associated with the order of voltage application and the interval of voltage application is included in the control unit 11.

Voltage application to each of the electrodes 22a to 25a is executed in the following procedure. At first, voltage application to the first electrode 22a starts, and after time A11 has passed, voltage application to the second electrode 23a starts. Next, after voltage application to the second electrode 23a started and time B11 passed by, voltage application to the third electrode 24a starts. After voltage application to the third electrode 24a started and time C11 passed by, voltage application to the fourth electrode 25a starts.

The waiting time for each path is decided with reference to the interval of voltage application and the delay time of the electrode to which voltage application starts last. For instance, the waiting time $t_{11}$ for connecting the input port IN_1 to the output port OUT_1 is a total of the three voltage application intervals $A_{11}$, $B_{11}$, and $C_{11}$ added with the delay time $t_{R2\_11}$ for the electrode to which voltage application starts last, namely the fourth electrode 25a, and the margin $\alpha$ to absorb an error of the delay time. At this point, by setting the values of the voltage application intervals $A_{11}$, $B_{11}$, and $C_{11}$ appropriately, like setting the values large enough for each delay time $t_{F1\_11}$, $t_{F2\_11}$, $t_{R1\_11}$, and $t_{R2\_11}$, after the waiting time $t_{11}$ has passed since the start of voltage application to the first electrode (electrode 22a), the output voltage from all the four electrodes 22a to 25a can be stabilized.

The waiting time $t_{ij}$ when the ith input port IN_i is connected to the jth output port OUT_j is decided as described below.

$$t_{ij} = (A_{ij} + B_{ij} + C_{ij}) + t_{R2\_ij} + \alpha$$

The NxN patterns of waiting times $t_{11}$ to $t_{NN}$ decided as described above are then stored in the waiting-time table 14, and the control unit 11 executes the path-switching process with reference to the waiting time.

While the order of voltage application herein was 22a, 23a, 24a, and 25a, the order of voltage application is not limited to this order. Also, while the order of voltage application was constant in all of the paths, different order of voltage application may be set for each path to apply voltage to the electrodes 22a to 25a in the orders.

In this way, since the waiting time stored in the waiting-time table 14 is decided based on the voltage application interval for starting voltage application to each electrode 22a to 25a corresponding to the path to be connected in the predetermined order and the delay time for the electrode to which voltage is applied last, when voltage application to the four electrodes 22a to 25a starts in the predetermined order, the optical-switch control apparatus 1 can start fine control of the output signal light with the appropriate waiting time corresponding to the target of the driving force output in association with the path to be connected, whereby the switching time for the optical switch 2 can be reduced.

While the present embodiment uses EO devices as a means of switching optical signals in the optical switch 2, the present invention is not limited to the optical switch using the EO device but an optical switch using another optical signal switching unit may be used as long as the delay time varies with respect to each path.

According to the present invention, it is possible to start a fine control of the output signal light with an appropriate waiting time according to the path to be connected, and to reduce the switching time of the optical switch.

Furthermore, according to the present invention, it is possible to start a fine control of the output signal light with an appropriate waiting time according to the target of the driving force associated with the path to be connected, and to reduce the switching time of the optical switch.

Moreover, according to the present invention, it is possible to switch the path by controlling voltage applied to the electro-optical device, and to reduce the switching time of the optical switch using the conventional electro-optical device.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

**Claims**

1. An optical-switch control apparatus that controls switching of paths in an optical switch, the optical-switch control apparatus comprising:

   a response-time storing unit that stores a response time from start of output of driving force required for switching paths until stabilization of the driving force, for each of the paths to be connected; and
   a driving-force correcting unit that corrects output level of the driving force, wherein
   the driving-force correcting unit starts correction of the output level of the driving force after the response time for a specified path stored in the response-time storing unit has passed since output of the driving force required for switching to the specified path started.

2. The optical-switch control apparatus according to claim 1, further comprising:

   an output monitoring unit that monitors a signal level of an output signal light from the optical switch, wherein
   the driving-force correcting unit corrects the output level of the driving force when the signal level of the output signal light monitored by the output monitoring unit is out of a predetermined range.

3. The optical-switch control apparatus according to claim 1, further comprising:

   an output control unit that controls to output the driving force simultaneously to all driving-force output destinations associated with the paths to be connected, wherein
   the response time is determined based on a time from starting control of the driving force output to each of the driving-force output destinations by the output control unit until stabilization of the driving force for a driving-force output destination that takes longest time for the driving force to be stabilized.

4. The optical-switch control apparatus according to claim 1, further comprising:

   an output control unit that controls output of the driving force to each of driving-force output destinations based on an order of outputting the driving force and an interval of starting output of the driving force determined for each of the paths to be connected, wherein
   the response time is determined based on a time from starting control of the driving force output to each of the driving-force output destinations by the output control unit until stabilization of the driving force for a driving-force output destination for which the driving force is output last.

5. The optical-switch control apparatus according to claim 3, wherein
   the driving force a voltage; and
   the driving-force output destination is either one of two electrodes in an electro-optical device formed by sandwiching a material having an electro-optical effect between the two electrodes.

6. The optical-switch control apparatus according to claim 4, wherein
   the driving force a voltage; and
   the driving-force output destination is either one of two electrodes in an electro-optical device formed by sandwiching a material having an electro-optical effect between the two electrodes.

7. The optical-switch control apparatus according to claim 5, wherein
   the voltage is generated by a circuit configured with a general-purpose amplifier.

8. The optical-switch control apparatus according to claim 6, wherein

the voltage is generated by a circuit configured with a general-purpose amplifier.

9. A method of controlling switching of paths in an optical switch, the method comprising:

storing a response time from start of output of driving force required for switching paths until stabilization of the driving force, for each of the paths to be connected; and
correcting output level of the driving force, wherein
the correcting includes starting correction of the output level of the driving force after the response time for a specified path stored at the storing has passed since output of the driving force required for switching to the specified path started.

10. The method according to claim 9, further comprising:

monitoring a signal level of an output signal light from the optical switch, wherein
the correcting includes correcting the output level of the driving force when the signal level of the output signal light monitored at the monitoring is out of a predetermined range.

11. The method according to claim 9, further comprising:

controlling to output the driving force simultaneously to all driving-force output destinations associated with the paths to be connected, wherein
the response time is determined based on a time from starting control of the driving force output to each of the driving-force output destinations until stabilization of the driving force for a driving-force output destination that takes longest time for the driving force to be stabilized.

12. The method according to claim 9, further comprising:

controlling output of the driving force to each of driving-force output destinations based on an order of outputting the driving force and an interval of starting output of the driving force determined for each of the paths to be connected, wherein
the response time is determined based on a time from starting control of the driving force output to each of the driving-force output destinations until stabilization of the driving force for a driving-force output destination for which the driving force is output last.

# FIG.1

VOLTAGE APPLICATION

OPTICAL-SWITCH CONTROL APPARATUS — 1

MONITOR OUTPUT SIGNAL

INPUT PORT

22  23  24  25

OUTPUT PORT

IN_1

22a  23a

IN_2

22  23

24a

IN_(N-1)

22  23

22  23

IN_N

24  25  25a

OUT_1

OUT_2

OUT_(N-1)

24  25

OUT_N

24  25

21

2 OPTICAL SWITCH

EP 1 791 021 A2

9

# FIG.2

1 OPTICAL-SWITCH CONTROL APPARATUS

11 CONTROL UNIT

13 PATH-INFORMATION STORING UNIT

14 WAITING-TIME TABLE

12 VOLTAGE APPLYING UNIT

15 OUTPUT MONITORING UNIT

IN_1
IN_2
IN_N

2 OPTICAL SWITCH

OUT_1
OUT_2
OUT_N

EP 1 791 021 A2

# FIG.3

| | | OUTPUT | | | | | |
|---|---|---|---|---|---|---|---|
| | | 1 | 2 | 3 | $\cdots$ | N-1 | N |
| INPUT | 1 | $t_{11}$ | $t_{12}$ | $t_{13}$ | | $t_{1(N-1)}$ | $t_{1N}$ |
| | 2 | $t_{21}$ | $t_{22}$ | $t_{23}$ | | $t_{2(N-1)}$ | $t_{2N}$ |
| | 3 | $t_{31}$ | $t_{32}$ | $t_{33}$ | | $t_{3(N-1)}$ | $t_{3N}$ |
| | $\vdots$ | | | | | | |
| | N-1 | $t_{(N-1)1}$ | $t_{(N-1)2}$ | $t_{(N-1)3}$ | | $t_{(N-1)(N-1)}$ | $t_{(N-1)N}$ |
| | N | $t_{N1}$ | $t_{N2}$ | $t_{N3}$ | | $t_{N(N-1)}$ | $t_{NN}$ |

# FIG.4

START

S101
INPUT PATH-SWITCHING COMMAND

S102
READ CURRENT PATH INFORMATION

S103
NO ←— IS CONNECTION PERMITTED?

YES

S104
CONNECTION ERROR

S105
APPLY VOLTAGE TO ELECTRODE

S106
READ WAITING TIME OF PATH TO ESTABLISH CONNECTION

S107
WAIT FOR THE READ WAITING TIME

S108
MONITOR SIGNAL LEVEL OF SIGNAL LIGHT OUTPUT FROM OUTPUT PORT

S109
IS SIGNAL LEVEL WITHIN PREDETERMINED RANGE? —→ NO

YES

S110
FINE CONTROL OF APPLIED VOLTAGE

END

# FIG.5

(IN_1→OUT_1)

| | INPUT | | OUTPUT | |
|---|---|---|---|---|
| PORT | 1 | | 2 | |
| ELECTRODE | 1 | 2 | 1 | 2 |
| DELAY | $t_{F1\_11}$* | $t_{F2\_11}$ | $t_{R1\_11}$ | $t_{R2\_11}$ |

| MAXIMUM DELAY | + | MARGIN | = | WAITING TIME |
|---|---|---|---|---|

→ $t_{F1\_11}$ + $\alpha$ = $t_{11}$

MAXIMUM DELAY

(IN_1→OUT_2)

| PORT | 1 | | 2 | |
|---|---|---|---|---|
| ELECTRODE | 1 | 2 | 1 | 2 |
| DELAY | $t_{F1\_12}$* | $t_{F2\_12}$ | $t_{R1\_12}$ | $t_{R2\_12}$ |

→ $t_{F1\_12}$ + $\alpha$ = $t_{12}$

(IN_1→OUT_3)

| PORT | 1 | | 3 | |
|---|---|---|---|---|
| ELECTRODE | 1 | 2 | 1 | 2 |
| DELAY | $t_{F1\_13}$ | $t_{F2\_13}$ | $t_{R1\_13}$* | $t_{R2\_13}$ |

→ $t_{R1\_13}$ + $\alpha$ = $t_{13}$

(IN_1→OUT_N)

| PORT | 1 | | N | |
|---|---|---|---|---|
| ELECTRODE | 1 | 2 | 1 | 2 |
| DELAY | $t_{F1\_1N}$ | $t_{F2\_1N}$ | $t_{R1\_1N}$* | $t_{R2\_1N}$ |

→ $t_{R1\_1N}$ + $\alpha$ = $t_{1N}$

(IN_2→OUT_1)

| PORT | 2 | | 1 | |
|---|---|---|---|---|
| ELECTRODE | 1 | 2 | 1 | 2 |
| DELAY | $t_{F1\_21}$ | $t_{F2\_21}$ | $t_{R1\_21}$* | $t_{R2\_21}$ |

→ $t_{R1\_21}$ + $\alpha$ = $t_{21}$

(IN_N→OUT_N)

| PORT | N | | N | |
|---|---|---|---|---|
| ELECTRODE | 1 | 2 | 1 | 2 |
| DELAY | $t_{F1\_NN}$ | $t_{F2\_NN}$ | $t_{R1\_NN}$ | $t_{R2\_NN}$* |

→ $t_{R2\_NN}$ + $\alpha$ = $t_{NN}$

# FIG.6

EP 1 791 021 A2

**(IN_1→OUT_1)**

| | | INPUT | | OUTPUT | |
|---|---|---|---|---|---|
| PORT | | 1 | | 1 | |
| ELECTRODE | | 1 | 2 | 1 | 2 |
| DELAY | | $t_{F1\_11}$ | $t_{F2\_11}$ | $t_{R1\_11}$ | $t_{R2\_11}$ |
| VOLTAGE APPLYING ORDER | | 1 | 2 | 3 | 4 |
| VOLTAGE APPLYING INTERVAL | | $\leftarrow A_{11}\rightarrow$ | $\leftarrow B_{11}\rightarrow$ | $\leftarrow C_{11}\rightarrow$ | |

| TOTAL OF VOLTAGE APPLYING INTERVALS | + | DELAY TIME FOR THE LAST ELECTRODE IN THE VOLTAGE APPLYING ORDER | + | MARGIN | = | WAITING TIME |

TOTAL

$$A_{11}+B_{11}+C_{11} \quad + \quad t_{R2\_11} \quad + \quad \alpha \quad = \quad t_{11}$$

**(IN_1→OUT_2)**

| | | | | | |
|---|---|---|---|---|---|
| PORT | | 1 | | 2 | |
| ELECTRODE | | 1 | 2 | 1 | 2 |
| DELAY | | $t_{F1\_12}$ | $t_{F2\_12}$ | $t_{R1\_12}$ | $t_{R2\_12}$ |
| VOLTAGE APPLYING ORDER | | 1 | 2 | 3 | 4 |
| VOLTAGE APPLYING INTERVAL | | $\leftarrow A_{12}\rightarrow$ | $\leftarrow B_{12}\rightarrow$ | $\leftarrow C_{12}\rightarrow$ | |

$$A_{12}+B_{12}+C_{12} \quad + \quad t_{R2\_12} \quad + \quad \alpha \quad = \quad t_{12}$$

$\vdots$

**(IN_N→OUT_N)**

| | | | | | |
|---|---|---|---|---|---|
| PORT | | N | | N | |
| ELECTRODE | | 1 | 2 | 1 | 2 |
| DELAY | | $t_{F1\_NN}$ | $t_{F2\_NN}$ | $t_{R1\_NN}$ | $t_{R2\_NN}$ |
| VOLTAGE APPLYING ORDER | | 1 | 2 | 3 | 4 |
| VOLTAGE APPLYING INTERVAL | | $\leftarrow A_{NN}\rightarrow$ | $\leftarrow B_{NN}\rightarrow$ | $\leftarrow C_{NN}\rightarrow$ | |

$$A_{NN}+B_{NN}+C_{NN} \quad + \quad t_{R2\_NN} \quad + \quad \alpha \quad = \quad t_{NN}$$

# FIG.7

CONTROL UNIT 111

103 103 103 103

IN_1

IN_2

122 122

102 OPTICAL SWITCH

121 123 123

OUT_1

OUT_2

115 OUTPUT MONITORING UNIT

103 103 103 103

# FIG.8

LARGE ELECTRODE DIMENSION
→ LARGE DELAY TIME

SMALL ELECTRODE DIMENSION
→ SMALL DELAY TIME

**REFERENCES CITED IN THE DESCRIPTION**

**Patent documents cited in the description**

- JP 2003098559 A